# EUROPÄISCHE PATENTANMELDUNG

(11) **EP 3 488 970 A1**
(43) Veröffentlichungstag der Anmeldung: **29.05.2019**
(21) Anmeldenummer: 17202952.2
(22) Anmeldetag: 22.11.2017
(51) Int. Cl.: B25B 5/16, B25J 9/08

(54) **ANORDNUNG VON SCHWENKVORRICHTUNGEN, INSBESONDERE ZUR VERWENDUNG IM KAROSSERIEBAU DER KFZ-INDUSTRIE**

(71) Anmelder: UNIVER S.p.A., 20128 Milano (IT)
(72) Erfinder: Migliori, Luciano, 20124 Milano (IT)
(74) Vertreter: Quermann, Helmut

(57) **Zusammenfassung**

Die Erfindung betrifft eine Anordnung mit mindestens einer Schwenkvorrichtung, wobei eine erste Schwenkvorrichtung (1) ein erstes Kraftmittel (3), eine mittels des ersten Kraftmittels 3 antreibbare erste Ausgangswelle (4) und ein erstes Gehäuse (5) aufweist, wobei die erste Ausgangswelle (4) in dem ersten Gehäuse (5) gelagert und aus diesem herausgeführt ist, ferner mindestens ein erstes Schwenkelement (6), das mit der ersten Ausgangswelle (4) in deren herausgeführten Bereich drehfest verbunden ist, aufweist.

Erfindungsgemäß ist vorgesehen, dass mit dem mindestens ersten Schwenkelement (6) eine zweite Schwenkvorrichtung (2) verbunden ist, wobei die zweite Schwenkvorrichtung (2) ein zweites Kraftmittel (9), eine mittels des zweiten Kraftmittels (9) antreibbare zweite Ausgangswelle (10) und ein zweites Gehäuse (11) aufweist, wobei die zweite Ausgangswelle (10) in dem zweiten Gehäuse (11) gelagert und aus diesem herausgeführt ist, ferner mit mindestens einem zweiten Schwenkelement (13), das mit der zweiten Ausgangswelle (10) in deren herausgeführten Bereich drehfest verbunden ist, zum Verbinden eines Werkzeugs oder einer dritten Schwenkvorrichtung mit dem mindestens zweiten Schwenkelement (13).

Durch diese Ausbildung kann die Schwenkbarkeit der Anordnung bezüglich Freiheitsgraden gesteigert werden.

## Beschreibung

Die Erfindung betrifft eine Anordnung mit mindestens einer Schwenkvorrichtung, wobei eine erste Schwenkvorrichtung ein erstes Kraftmittel, eine mittels des ersten Kraftmittels antreibbare erste Ausgangswelle und ein erstes Gehäuse aufweist, wobei die erste Ausgangswelle in dem ersten Gehäuse gelagert und aus diesem herausgeführt ist, ferner mindestens ein erstes Schwenkelement, das mit der ersten Ausgangswelle in deren herausgeführtem Bereich drehfest verbunden ist, aufweist.

Derartige Schwenkvorrichtungen finden insbesondere im Karosseriebau der Kfz-Industrie Verwendung. Bei diesen sind die Kraftmittel unterschiedlich gestaltet und hierbei insbesondere pneumatisch oder elektrisch wirkend ausgebildet. Mit dem ersten Schwenkelement der Schwenkvorrichtung ist ein Werkzeug verbindbar, um mittels dessen insbesondere die Funktion einer Spannvorrichtung, einer Schweißzange, eines Prägewerkzeugs, eines Clinchwerkzeugs oder eines Stiftziehzylinders zu vollführen.

Schwenkvorrichtungen der eingangs genannten Art sind beispielsweise in der WO 2013/104355 A2 und der EP 1 952 946 A2 beschrieben.

Die in der WO 2013/104355 A2 beschriebene Schwenkvorrichtung weist ein Schwenkelement auf, das als Schwenkarm ausgebildet ist, der aus zwei Armteilen besteht, die in unterschiedlichen Positionen fest miteinander verbindbar ausgebildet sind. Dabei weisen die Armteile jeweils ein in unterschiedlichen Positionen mindestens teilweise zueinander fluchtendes Lochmuster mit Durchgangs- und Gewindebohrungen auf und sind mit Schrauben miteinander verbunden ausgebildet. Eine Montageplatte ist fest, aber lösbar mit den Schwenkarmen verbunden ausgebildet und weist ein Lochmuster zur Befestigung von verschwenkbaren Vorrichtungen auf. Die Zweiteiligkeit des Schwenkarms hat den Vorteil, dass die Montageplatte, je nach Anwendungsfall, am Schwenkarm befestigbar ist. Eine Vorratshaltung unterschiedlicher Schwenkarme mit unterschiedlich daran angeordneten Montageplatten kann somit entfallen.

Bei diesen bekannten Schwenkvorrichtungen kann ein vom Schwenkelement aufgenommenes Werkzeug somit nur um die Drehachse der Ausgangswelle der Schwenkvorrichtung geschwenkt werden.

Aufgabe der vorliegenden Erfindung ist es, eine Anordnung der eingangs genannten Art so weiterzubilden, dass eine Schwenkbarkeit der Anordnung bezüglich Freiheitsgraden gesteigert werden kann.

Gelöst wird die Aufgabe durch eine Anordnung von Schwenkvorrichtungen, wie sie in Patentanspruch 1 beschrieben ist. Weiterbildungen der Erfindung sind Gegenstand der Unteransprüche.

Erfindungsgemäß ist somit mit dem mindestens ersten Schwenkelement der ersten Schwenkvorrichtung eine zweite Schwenkvorrichtung verbunden, wobei die zweite Schwenkvorrichtung ein zweites Kraftmittel, eine mittels des zweiten Kraftmittels antreibbare zweite Ausgangswelle und ein zweites Gehäuse aufweist. Die zweite Ausgangswelle ist in dem zweiten Gehäuse gelagert und aus diesem herausgeführt. Ferner ist das mindestens eine zweite Schwenkelement mit der zweiten Ausgangswelle in deren herausgeführtem Bereich drehfest verbunden, zum Verbinden eines Werkzeugs oder einer dritten Schwenkvorrichtung mit dem mindestens einen zweiten Schwenkelement.

Es wird somit eine Anordnung vorgeschlagen, bei der mindestens die beiden Schwenkvorrichtungen miteinander kombiniert sind und somit den Freiheitsgrad des in der zweiten Schwenkvorrichtung gelagerten Werkzeugs steigern. So ermöglicht es die erste Schwenkvorrichtung die zweite Schwenkvorrichtung zu schwenken und es ermöglicht die zweite Schwenkvorrichtung die relative Schwenkbarkeit des Werkzeugs zu dieser zweiten Schwenkvorrichtung. Somit ist nicht nur eine Schwenkbarkeit des Werkzeugs in einer Ebene, senkrecht zur Drehachse der zweiten Ausgangswelle möglich, sondern in einer Vielzahl weiterer Ebenen aufgrund der Schwenkbarkeit der zweiten Schwenkvorrichtung in einer Ebene senkrecht zur Drehachse der ersten Ausgangswelle der ersten Schwenkvorrichtung. Ist eine dritte Schwenkvorrichtung in der zweiten Schwenkvorrichtung gelagert, dient das mit der Ausgangswelle der dritten Schwenkvorrichtung verbundene Schwenkelement der Aufnahme des Werkzeugs.

Insbesondere ist vorgesehen, dass das Schwenkelement von zweiter oder dritter Schwenkvorrichtung mit dem Werkzeug, um mittels dessen insbesondere die Funktion einer Spannvorrichtung, einer Schweißzange, eines Prägewerkzeugs, eines Clinchwerkzeugs oder eines Stiftziehzylinders, insbesondere jeweils im Karosseriebau der Kfz-Industrie, zu vollführen, verbindbar ist.

Vorzugsweise weist mindestens eine der Schwenkvorrichtungen, insbesondere die Schwenkvorrichtungen, jeweils ein Kraftmittel auf, wobei die jeweilige Ausgangswelle über ein Getriebe an das Kraftmittel angebunden ist. Diese Gestaltung ermöglicht auf einfache Art und Weise eine Untersetzung der Bewegung des Kraftmittels zur Vollführung der Bewegung des Schwenkelements der relevanten Schwenkvorrichtung.

Insbesondere ist vorgesehen, dass das jeweilige Getriebe zumindest ein Schneckengetriebe aufweist, wobei ein Schneckenrad des Schneckengetriebes drehfest mit der Ausgangswelle verbunden ist und eine mit dem Schneckenrad kämmende Schneckenwelle an eine drehbare Ausgangswelle des Kraftmittels angebunden ist. Bei relativ geringem Bauraum lässt sich somit eine Drehzahlveränderung zwischen Kraftmittel und Ausgangswelle herbeiführen, insbesondere eine Untersetzung der Drehzahl des Kraftmittels. Insbesondere ist die Welle des Schneckengetriebes mittels eines Elektromotors in einer Drehrichtung und in einer zu dieser Drehrichtung entgegengesetzten Drehrichtung antreibbar. Der Elektromotor ist vorzugsweise als Schrittmotor oder als Brushlessmotor ausgebildet.

Unabhängig von der Art des Kraftmittels ist dieses insbesondere geeignet, das mindestens eine Schwenkelement der jeweiligen Schwenkvorrichtung in einer Richtung hin und in der entgegengesetzten Richtung zurück zu verschwenken. Grundsätzlich ist aber durchaus eine Drehbewegung > 360° möglich.

Die Schwenkvorrichtung kann durchaus auch ein Zwischengetriebe aufweisen. Insofern wird es als vorteilhaft angesehen, wenn das jeweilige Getriebe ein Zwischengetriebe aufweist, das an die drehbare Ausgangswelle des Kraftmittels und die Schneckenwelle angebunden ist, insbesondere das Zwischengetriebe ein Stirnradgetriebe ist. Hierdurch lässt sich eine besonders große Untersetzung der Drehzahl, insbesondere bei Verwendung eines Elektromotors, zur Erreichung einer präzisen Verschwenkung des Schwenkelements erzielen.

Vorzugsweise weist die jeweilige Schwenkvorrichtung ein Antriebsteil, das das Kraftmittel aufweist, und ein Kopfteil, das das Getriebe aufweist, auf, wobei das Gehäuse in ein Gehäusteil des Antriebsteils und ein Gehäuseteil des Kopfteils unterteilt ist, die beiden Gehäuseteile miteinander verbunden sind und das Kopfteil mit mindestens einer Aufnahme zum Lagern dieses Kopfteils versehen ist. Die beiden Gehäuseteile sind insbesondere lösbar miteinander verbunden. Die Aufnahme zum Lagern des Kopfteils dient insbesondere dem Lagern des Kopfteils in einem beweglichen Roboterarm bei einem Roboter, der im Bereich der Karosseriefertigung der Kfz-Industrie Verwendung findet.

Vorzugsweise ist eine solche Anordnung von Ausgangswelle und Gehäuse der jeweiligen Schwenkvorrichtung vorgesehen, dass die jeweilige Ausgangswelle das Gehäuse der Schwenkvorrichtung, insbesondere das Gehäuseteil des Kopfteils, auf einer Seite oder beidseitig durchsetzt und herausgeführt ist. Insbesondere bei beidseitiger Herausführung der Ausgangswelle aus dem Gehäuse kann grundsätzlich mit jedem Ende der Ausgangswelle eine weitere Schwenkvorrichtung verbunden werden. In aller Regel ist aber vorgesehen, dass mit den beiden Enden der Ausgangswelle jeweils Schwenkarme, insbesondere identisch ausgerichtete Schwenkarme verbunden sind, die im Bereich der Schwenkarmenden das Werkzeug aufnehmen, eine Aufnahme für das Werkzeug aufnehmen oder die weitere Schwenkvorrichtung aufnehmen.

Gemäß einer bevorzugten Weiterbildung ist vorgesehen, dass das jeweilige Schwenkelement mit einem Ende der Ausgangswelle drehfest verbunden ist und mit dem Schwenkelement, im Bereich dessen der Ausgangswelle abgewandten Endes, eine Aufnahme, insbesondere eine Aufnahmeplatte, verbunden ist, zur Befestigung einer Schwenkvorrichtung oder eines Werkzeugs an der Aufnahme. Dies ermöglicht eine weitgehend universelle Anordnung mindestens zweier Schwenkvorrichtungen bzw. von Werkzeugen bezüglich dieser Schwenkvorrichtungen.

Es wird als besonders vorteilhaft angesehen, wenn das eine Schwenkelement bzw. die beiden Schwenkelemente der jeweiligen Schwenkvorrichtung ein Aufnahmeprofil für die Aufnahme und die Aufnahme ein Gegenprofil, das mit dem Aufnahmeprofil korrespondiert, aufweist, wobei das Aufnahmeprofil und das Gegenprofil derart gestaltet sind, dass diese Profile in unterschiedlichen Stellungen von Aufnahme und Schwenkelement zueinander ausrichtbar sind. Hierdurch ist es möglich, die in der ersten Schwenkvorrichtung gelagerte zweite Schwenkvorrichtung in unterschiedlichen Positionen zu lagern bzw. das in der zweiten Schwenkvorrichtung gelagerte Werkzeug bzw. gelagerte weitere Schwenkvorrichtung in unterschiedlichen Positionen zu lagern. Wegen dieser universelleren Gestaltung des Aufnahmebereichs des Schwenkelements lässt sich eine universellere Anordnung von in diesem gelagerten anderen Schwenkelement bzw. in diesem gelagerten Werkzeug erreichen.

Die Aufnahme, insbesondere die Aufnahmeplatte ist vorzugsweise mittels Schrauben mit dem Schwenkelement bzw. den beiden Schwenkelementen verbunden und/oder es ist vorzugsweise die Schwenkvorrichtung mittels Schrauben mit der Aufnahme verbunden.

Gemäß einer bevorzugten Weiterbildung der Erfindung ist vorgesehen, dass mit der Ausgangswelle der zweiten oder dritten Schwenkvorrichtung ein Lagerelement, insbesondere eine Lagerplatte drehfest verbunden ist und eine Aufnahme, insbesondere eine Aufnahmeplatte, mittels Schrauben mit dem Lagerelement verbunden ist. Diese Gestaltung ermöglicht eine Lagerung eines von dieser Aufnahme aufgenommenen Werkzeugs, um eine Drehachse, die der Drehachse der Ausgangswelle der zweiten bzw. dritten Schwenkvorrichtung entspricht.

Unter diesem Aspekt wird es als besonders vorteilhaft angesehen, wenn die Aufnahme ein Aufnahmeprofil und das Lagerelement ein mit dem Aufnahmeprofil korrespondierendes Gegenprofil aufweist, wobei diese Aufnahme und die Aufnahme für das mindestens eine Schwenkelement identisch ausgebildet sind. Bei baulich einfachster Gestaltung ist somit eine drehbare Lagerung der zweiten Schwenkvorrichtung in der ersten Schwenkvorrichtung bzw. eine drehbare Lagerung des Werkzeugs in der zweiten Schwenkvorrichtung möglich. Die zweite Schwenkvorrichtung bzw. das in dieser gelagerte Werkzeug kann um einen beliebigen Winkel gedreht werden, somit grundsätzlich über einen Winkel der größer als 360° ist. Entsprechendes gilt bei einer Lagerung der dritten Schwenkvorrichtung in der zweiten Schwenkvorrichtung.

Die Schwenkachsen der Ausgangswellen der Schwenkvorrichtungen sind vorzugsweise parallel oder senkrecht oder geneigt zueinander angeordnet.

Weitere Merkmale der Erfindung sind in den Unteransprüchen, der Beschreibung der Figuren sowie in den Figuren selbst dargestellt, wobei bemerkt wird, dass alle Einzelmerkmale und alle Kombinationen von Einzelmerkmalen erfindungswesentlich sind.

In den Figuren ist die Erfindung anhand mehrerer bevorzugter Ausführungsbeispiele veranschaulicht, ohne auf die beschriebenen Ausführungsformen beschränkt zu sein.

Es zeigt:
- Fig. 1: ein erstes Ausführungsbeispiel einer Anordnung von zwei Schwenkvorrichtungen, in einer räumlichen Darstellung,
- Fig. 2: ein zweites Beispiel einer Anordnung von zwei Schwenkvorrichtungen, in einer räumlichen Darstellung,
- Fig. 3: ein drittes Ausführungsbeispiel einer Anordnung von zwei Schwenkvorrichtungen, in einer räumlichen Darstellung,
- Fig. 4: ein viertes Ausführungsbeispiel einer Anordnung von zwei Schwenkvorrichtungen, in einer räumlichen Darstellung,
- Fig. 5: die in Fig. 1 veranschaulichte erste Schwenkvorrichtung, in einer anderen räumlichen Darstellung,
- Fig. 6: eine gegenüber dem Ausführungsbeispiel nach Fig. 5 modifizierte erste Schwenkvorrichtung, in einer räumlichen Darstellung,
- Fig. 7: ein gegenüber dem Ausführungsbeispiel nach Fig. 5 modifiziertes Ausführungsbeispiel der ersten Schwenkvorrichtung, in einer räumlichen Darstellung,
- Fig. 8: die in Fig. 1 gezeigte zweite Schwenkvorrichtung, in einer anderen räumlichen Darstellung,
- Fig. 9: die in Fig. 8 gezeigte Aufnahme in einer räumlichen Darstellung,
- Fig. 10: die Anordnung gemäß Fig. 9 in einem Schnitt senkrecht zur Drehachse der Aufnahme, im Bereich einer Verbindungsschraube geschnitten,
- Fig. 11 bis 16: für ein Kopfteil der in Fig. 1 gezeigten ersten Schwenkvorrichtung das Demontieren und Montieren einer Aufnahme mit zwei mit der Ausgangswelle der ersten Schwenkvorrichtung verbundenen Schwenkarmen,
- Fig. 17: einen Längsmittelschnitt durch das Kopfteil gemäß Fig. 11, senkrecht zur Ausgangswelle geschnitten, mit zusätzlich veranschaulichtem gleichfalls in dieser Ebene geschnittenen Antriebsteil der Schwenkvorrichtung,
- Fig. 18: ein fünftes Ausführungsbeispiel einer Anordnung von drei Schwenkvorrichtungen, in einer räumlichen Darstellung.

### Figurenbeschreibung

Die in der Figurenbeschreibung für die Ausführungsbeispiele der jeweiligen Schwenkvorrichtungen bezuggenommenen X-, Y- und Z-Richtungen stehen jeweils senkrecht zueinander. Grundsätzlich ist es aber nicht erforderlich, dass diese Richtungen senkrecht zueinander sind.

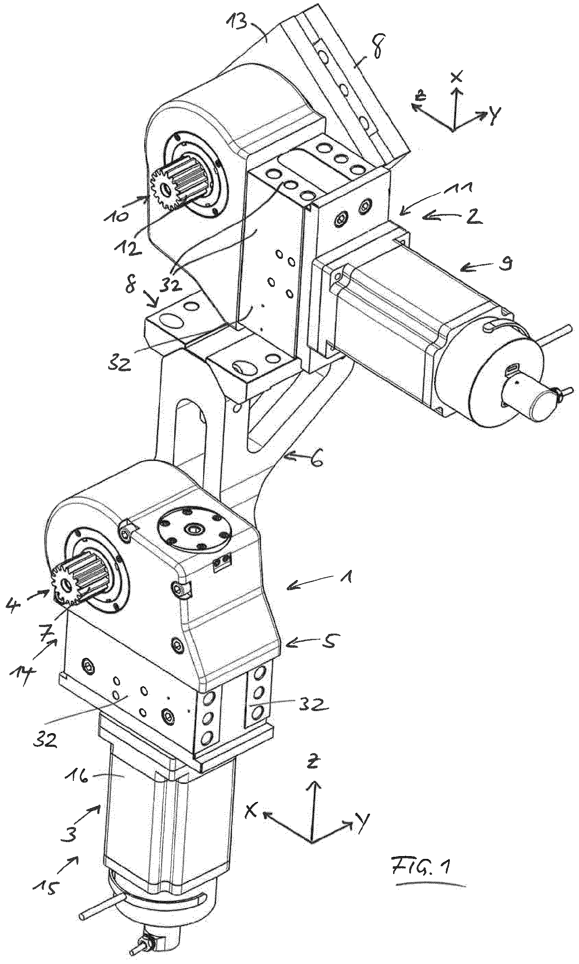

Fig. 1 zeigt ein Ausführungsbeispiel einer Anordnung von zwei Schwenkvorrichtungen, nämlich erster Schwenkvorrichtung 1 und zweiter Schwenkvorrichtung 2. Hierbei ist die Schwenkvorrichtung 2 in der Schwenkvorrichtung 1 schwenkbar gelagert.

Die erste Schwenkvorrichtung 1 weist ein erstes Kraftmittel 3, eine mittels des ersten Kraftmittels 3 antreibbare erste Ausgangswelle 4 und ein erstes Gehäuse 5 auf. Die erste Ausgangswelle 4 ist in dem ersten Gehäuse 5 gelagert und aus diesem herausgeführt. Ein erstes Schwenkelement 6 ist drehfest mit der ersten Ausgangswelle 4 verbunden. Die erste Ausgangswelle 4 ragt beidseitig des ersten Gehäuses aus der ersten Schwenkvorrichtung 1 heraus und ist dort als Zahnwelle ausgebildet, weist somit dort einen Zahnabschnitt 7 auf. Auf einen der beiden Zahnabschnitte 7 der ersten Ausgangswelle 4 ist das erste Schwenkelement 6 aufgesteckt und axial bezüglich der ersten Ausgangswelle 4 fixiert. Das erste Schwenkelement 6 ist als sich von der ersten Ausgangswelle 4 erweiternder Schwenkarm 8 ausgebildet, der im Bereich seines der ersten Ausgangswelle 4 abgewandten Endes mit einer Aufnahme 8 fest verbunden ist. Diese Aufnahme 8 ist als Aufnahmeplatte ausgebildet.

Befestigt wird die erste Schwenkvorrichtung 1 mit deren Gehäuse 5 insbesondere an einem Roboterarm eines insbesondere bei der Karosseriefertigung in der Kfz-Industrie Verwendung findenden Roboters.

Mit dem ersten Schwenkelement 6, konkret der Aufnahme 8, ist die zweite Schwenkvorrichtung 2 verbunden. Diese weist ein zweites Kraftmittel 9, eine mittels des zweiten Kraftmittels 9 antreibbare zweite Ausgangswelle 10 und ein zweites Gehäuse 11 auf. Die zweite Ausgangswelle 10 ist in dem zweiten Gehäuse 11 gelagert und aus diesem beidseitig herausgeführt. Diese zweite Ausgangswelle 10 ist entsprechend der ersten Ausgangswelle 4 ausgebildet, weist somit im Bereich der aus dem zweiten Gehäuse 11 herausgeführten Bereiche der zweiten Ausgangswelle 10 einen Zahnabschnitt 12 auf. Die Ausgangswellen 4 und 10 sind parallel zueinander angeordnet. Ein zweites Schwenkelement 13 ist mit der zweiten Ausgangswelle 10 im Bereich eines der beiden Zahnabschnitte 12 drehfest verbunden; zudem ist dieses zweite Schwenkelement 13 axial bezüglich der zweiten Ausgangswelle 10 festgelegt. Das zweite Schwenkelement dient dem Verbinden eines Werkzeugs mit dem zweiten Schwenkelement 13. Bei diesem Werkzeug handelt es sich beispielsweise um eine Spannvorrichtung, eine Schweißzange, ein Prägewerkzeug, ein Clinchwerkzeug oder einen Stiftziehzylinder.

Der Aufbau von erster Schwenkvorrichtung 1 und zweiter Schwenkvorrichtung 2 ist identisch, bis auf das mit der jeweiligen Ausgangswelle 4 bzw. 10 verbundene Schwenkelement 6 bzw. 13.

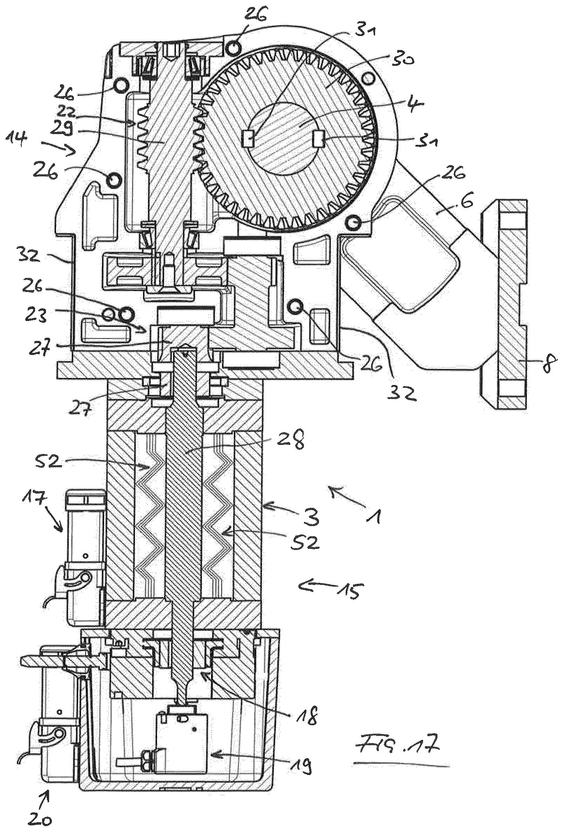

Der grundsätzliche Aufbau der Schwenkvorrichtung 1 bzw. 2 ist in der Fig. 17, nur für die erste Schwenkvorrichtung 1 veranschaulicht. Die nachstehenden Ausführungen gelten entsprechend für die zweite Schwenkvorrichtung 2 unter Berücksichtigung der vorstehend alternativ gewählten Bezugsziffern:
Die Schwenkvorrichtung weist ein Kopfteil 14 und ein Antriebsteil 15 auf. Das Antriebsteil 15 weist ein Gehäuse 16 und das von diesem aufgenommene Kraftmittel 3, bei dem es sich um einen Elektromotor handelt, auf. Grundsätzlich kann dieser Elektromotor ein Gleichstrommotor oder ein Wechselstrommotor sein. Der Motor ist beispielsweise bürstenlos. Insbesondere ist vorgesehen, dass der Elektromotor als Schrittmotor ausgebildet ist. Gemäß der Ausführungsform nach Fig. 17 ist das Kraftmittel 3, somit der Elektromotor, als Schrittmotor ausgebildet. Ferner weist das Antriebsteil 15 Anschlüsse 17 für den Schrittmotor, eine Bremse 18, einen Encoder 19 und Anschlüsse 20 für Bremse/Encoder auf. Der Encoder 19 ist ein selbstangetriebener Mehrbereichsencoder, womit keine Versorgung mittels einer Pufferbatterie erforderlich ist. Mit der Bezugsziffer 52 ist die elektrische Wicklung des Elektromotors bezeichnet.

Das Kopfteil 14 weist ein Gehäuse 21 auf, in dem ein Schneckengetriebe 22 und ein Zwischengetriebe 23 gelagert sind. Hierbei besteht das Gehäuse 21 aus Gehäusehälften 24, 25, die mittels einer Vielzahl Schrauben 26 in Y-Richtung miteinander verschraubt sind.

In Z-Richtung weist das Kopfteil 14 im Bereich seines unteren Endes eine Welle 27 auf, die eine Ausnehmung zur drehfesten Aufnahme einer Rotorwelle 28 des Schrittmotors aufweist. Bei Betätigung des Schrittmotors wird die Rotorwelle 28 über einen definierten Winkel gedreht und dreht entsprechend die Welle 27. Diese bildet Bestandteil des als Stirnradgetriebe ausgebildeten Zwischengetriebes 23, das ausgangsseitig drehfest mit einer im Gehäuse 5 gelagerten Schneckenwelle 29 des Schneckengetriebes 22 zusammenwirkt. Die Schneckenwelle 29 kämmt mit einem Schneckenrad 30 des Schneckengetriebes 22. Das Schneckenrad 30 ist in der Ausgangswelle 4 gelagert und über Passfedern 31 drehfest mit der Ausgangswelle 4 verbunden. Die Drehbewegung der Rotorwelle 28 wird somit drehzahluntersetzt und spielfrei auf die Ausgangswelle 4 übertragen und damit eine entsprechende Schwenkbewegung des in Fig. 17 veranschaulichten Schwenkelements 6, das als Schwenkarm ausgebildet ist, bewirkt. Die in Fig. 17 veranschaulichte Aufnahme 8 ist unter einem anderen Winkel mit dem Schwenkarm 6 verbunden, als in Fig. 1 gezeigt. Dieses Detail wird später erläutert.

Die insoweit zur Fig. 17 beschriebenen Einzelheiten der ersten Schwenkvorrichtung gelten, wie vorstehend dargelegt, entsprechend für die zweite Schwenkvorrichtung 2, abgesehen von der Ausbildung des Schwenkelements und der Anordnung der Aufnahme bezüglich des Schwenkelements.

Wie der Darstellung der Fig. 1 zu entnehmen ist, weist die jeweilige Schwenkvorrichtung 1 bzw. 2 im Bereich des Kopfteils 14 zwei in X-Z-Ebene und zwei in Y-Z-Ebene angeordnete Begrenzungsflächen 32 auf, wobei eine Begrenzungsfläche 32 oder zwei parallel zueinander angeordnete Begrenzungsflächen 32 der Befestigung des Kopfteils 14, somit der Befestigung der jeweiligen Schwenkvorrichtung dienen.

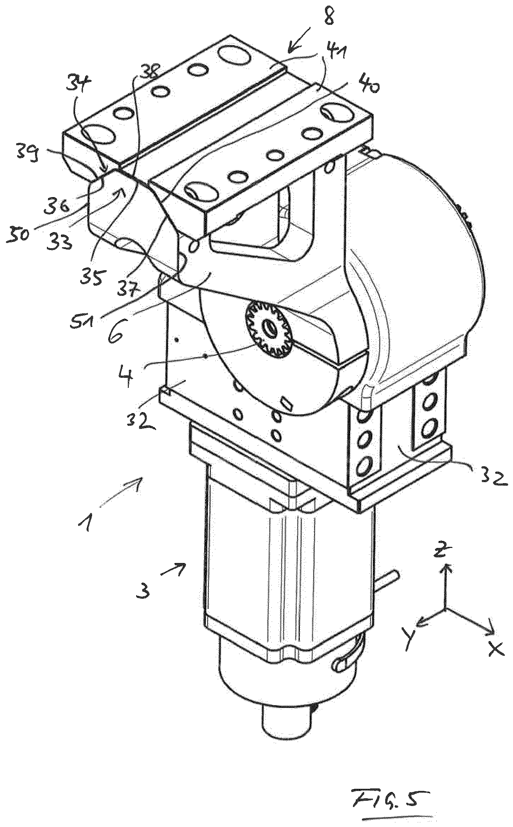

In Fig. 5 ist die in Fig. 1 veranschaulichte erste Schwenkvorrichtung 1 gezeigt, allerdings in einer anderen perspektivischen Ansicht. Dieser Figur ist zu entnehmen, dass das Schwenkelement 6 ein Aufnahmeprofil 33 für die Aufnahme 8 und die Aufnahme 8 ein Gegenprofil 34, das mit dem Aufnahmeprofil 33 korrespondiert, aufweist, wobei das Aufnahmeprofil 33 und das Gegenprofil 34 derart gestaltet sind, dass diese Profile in unterschiedlichen Stellungen von Aufnahme 8 und Schwenkelement 6 zueinander ausrichtbar sind. In der jeweiligen Stellung ist die Aufnahme 8 mit dem Schwenkelement 6 fest verbindbar.

Bezogen auf die in Fig. 5 veranschaulichte Stellung des Schwenkelements 6 weist das Aufnahmeprofil 33 einen zentralen Abschnitt 35 auf, der sich in der X-Y-Ebene erstreckt, ferner, unter einem identischen Winkel von 45° zu dieser X-Y-Ebene, verlaufen beidseitig an den zentralen Abschnitt 35 unmittelbar angrenzende Seitenabschnitte 36, 37. Desweiteren sind an die Seitenabschnitte 36, 37 angrenzende Endabschnitte 50, 51 vorhanden, die unter einem Winkel von 90° zur X-Y-Ebene angeordnet sind. Entsprechend weist das Gegenprofil 34 einen zentralen Abschnitt 38, der zu geringem Abstand zum zentralen Abschnitt 35 angeordnet ist, und an den Seitenabschnitten 36, 37 anliegende korrespondierende Seitenabschnitte 39, 40 auf. Somit lässt sich die Aufnahme 8 nicht nur in der in Fig. 5 gezeigten Position montieren, in der eine Aufnahmefläche 41 in der X-Y-Ebene angeordnet ist, positionieren, sondern auch unter einem Winkel zur X-Y-Ebene von 45°, jeweils um die Y-Achse um +45° oder -45° geschwenkt. In der jeweiligen der drei möglichen Anlagepositionen wird die Aufnahme 8 mit dem Schwenkelement 6 verschraubt.

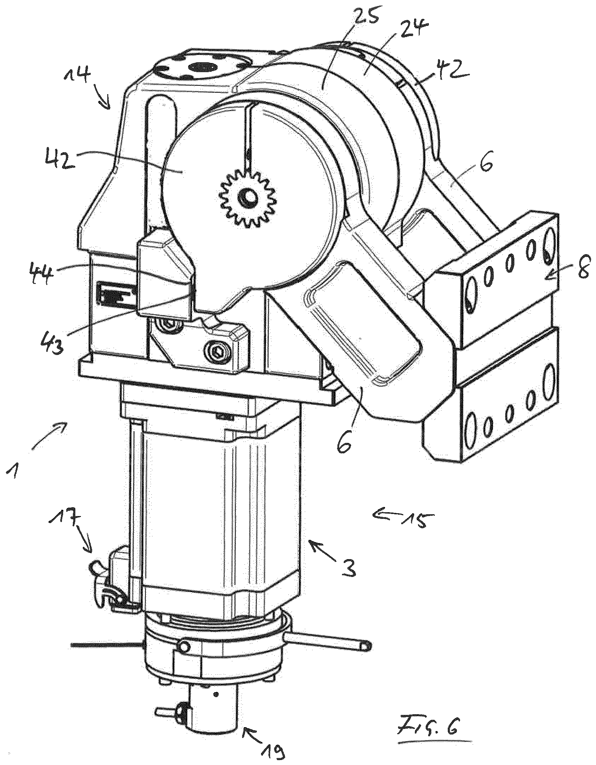

Fig. 6 zeigt eine Modifizierung gegenüber der Ausführungsform der Schwenkvorrichtung 1 gemäß Fig. 5, wobei diese Modifizierung erneut entsprechend für die zweite Schwenkvorrichtung 2 zutrifft. Veranschaulicht ist in Fig. 6, dass das Schwenkelement 6 nicht als mit einem Ende der Ausgangswelle verbundes, zweiarmiges Schwenkelement ausgebildet ist, sondern ein einarmiges Schwenkelement 6, jeweils mit einem der beiden Enden der Ausgangswelle 4, bei identischer Orientierung zueinander, mit der Ausgangswelle 4 drehfest verbunden ist. Somit sind die beiden Schwenkelemente 6, 6 beidseitig des Gehäuses 5 angeordnet und im Bereich deren freien Enden mit diesen die Aufnahme 8 verschraubt. Hierbei befindet sich die Aufnahme 8 aber in einer um 45° gekippten Stellung, bezogen auf die Anordnung der Aufnahme 8 gemäß Fig. 5. Dies ermöglicht es, die zweite Schwenkvorrichtung 2 oder ein mit der Schwenkvorrichtung 2 verbundenes Werkzeug in einer anderen Position bezüglich der Längserstreckung des die Aufnahme aufnehmenden Schwenkelements zu positionieren.

Fig. 6 verdeutlicht ferner, dass die gezahnte Ausgangswelle zusätzlich der drehfesten Aufnahme einer Scheibe 42 mit Bezugsauflage 43 dienen kann. In einer gewünschten Endlage des Schwenkelements kontaktiert die Bezugsauflage 43 einen mit dem Gehäuse 5 fest verbundenen Anschlag 44. Da die Scheibe 42 in unterschiedlichen Stellungen, entsprechend der Teilung des Zahnabschnitts 7 der Ausgangswelle 4 auf diese aufgesteckt sein kann, können je nach den Bedürfnissen des Kunden unterschiedliche Öffnungs- oder Schließstellungen des Schwenkelements 6 über das Zusammenwirken von Bezugsauflage 43 und Anschlag 44 erfasst werden. So kann jedem der beiden abgewandten Zahnabschnitte 7 der Ausgangswelle 4 eine Scheibe 42 zugeordnet sein, die mit einem gehäuseseitigen Anschlag 44 in Wirkverbindung bringbar ist. Diese Variante gilt grundsätzlich für die jeweilige Schwenkvorrichtung 1, 2.

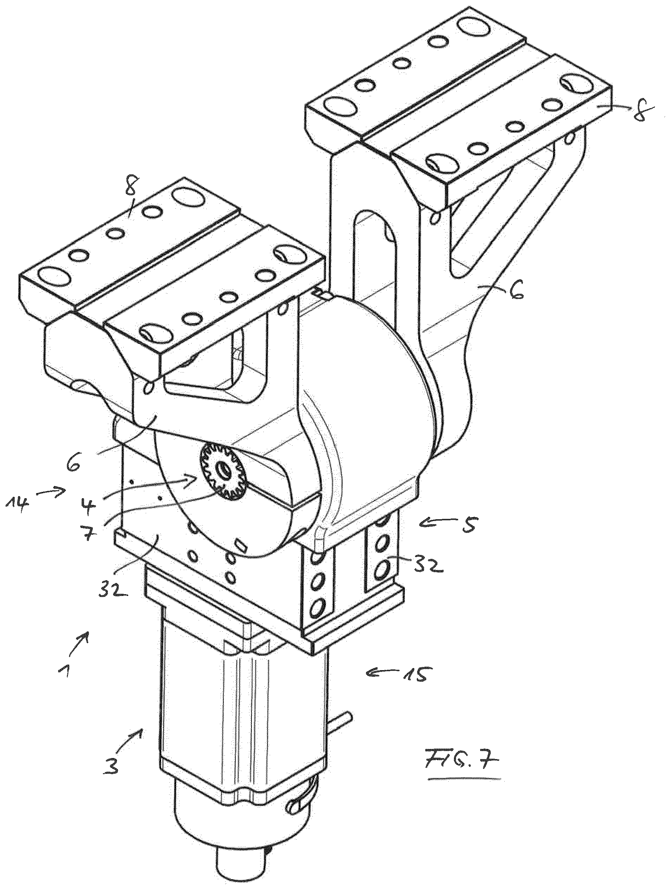

Das Ausführungsbeispiel gemäß der Fig. 7, wiederum nun veranschaulicht für die erste Schwenkvorrichtung 1, aber genauso geltend für die zweite Schwenkvorrichtung 2, unterscheidet sich von dem Ausführungsbeispiel gemäß der Fig. 5 nur dadurch, dass auch mit dem anderen Zahnabschnitt 7 der Ausgangswelle 4 ein zweiarmiges Schwenkelement 6 verbunden ist, das mit der Aufnahme 8 verbunden ist. Beide Schwenkelemente 6, 6 weisen dieselbe Orientierung auf, sodass mit den beiden Aufnahmen 8 entweder eine gemeinsame Schwenkvorrichtung oder ein gemeinsames Werkzeug verbindbar ist, oder aber mit jedem Schwenkelement 6 eine separate Schwenkvorrichtung oder ein separates Werkzeug verbindbar ist.

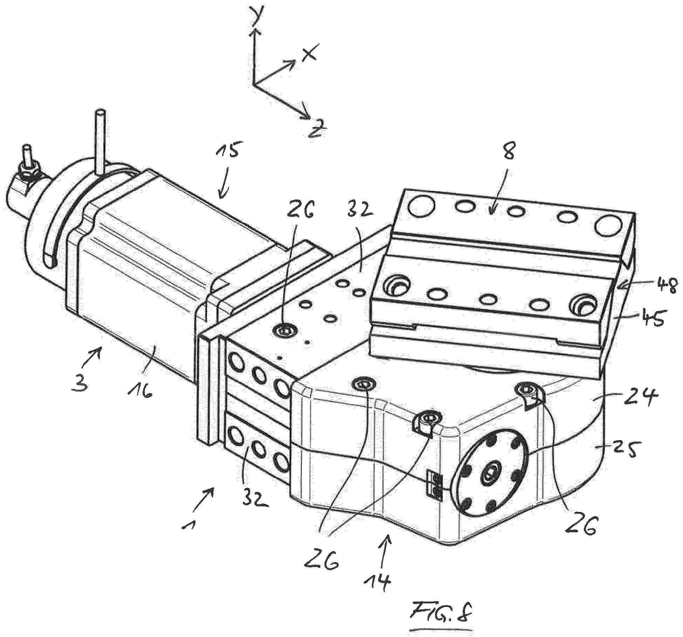

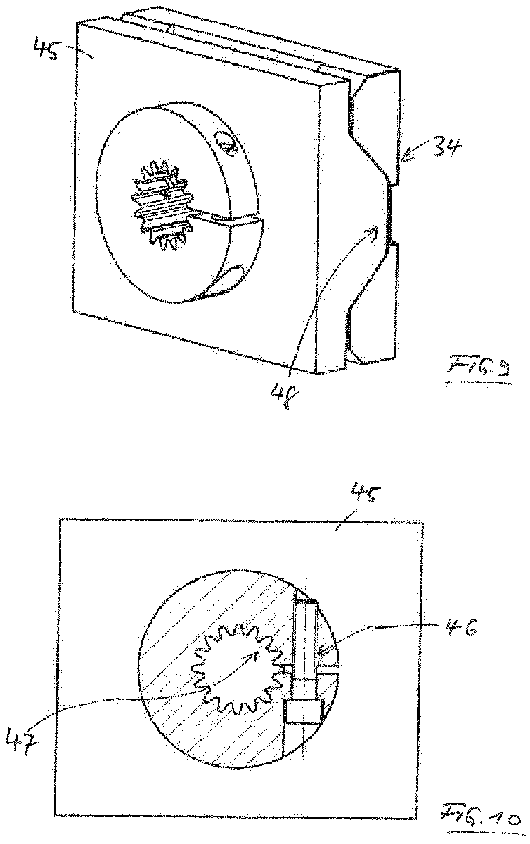

Das Ausführungsbeispiel nach der Fig. 8 unterscheidet sich von demjenigen nach der Fig. 5 dadurch, dass mit einem Zahnabschnitt 7 der Ausgangswelle 4 nicht ein Schwenkelement 6, das als Schwenkarm ausgebildet ist, verbunden ist, sondern auf den Zahnabschnitt 7 ein Schwenkelement 6, das als Lagerplatte ausgebildet ist, drehfest aufgesteckt ist. Wie insbesondere der Detaildarstellung gemäß der Fig. 9 und 10 zu entnehmen ist, dient eine Schraubenverbindung 46 dem festen Verbinden des Schwenkelements 6 im Bereich einer Zahnausnehmung 47 des Schwenkelements 6 mit dem Zahnabschnitt 7 der Ausgangswelle 4. Somit ist über eine drehung der Ausgangswelle 4 eine Drehbewegung des Schwenkelements 6 in der X-Z-Ebene möglich. In Y-Richtung dient das Schwenkelement 6, das mit einem Aufnahmeprofil 48 entsprechend dem Aufnahmeprofil 33 ausgebildet ist, der Lagerung des mit dem Schwenkelement 6 verschraubten Gegenprofils 34. Die Ausführungsform gemäß der Fig. 8 erlaubt eine Drehung der Einheit von Aufnahme 8 und Schwenkelement 6 um einen Winkel, der größer ist als 360°, im Gegensatz zu dem Ausführungsbeispiel, insbesondere gemäß der Fig. 6, bei dem nur eine Verschwenkung des bzw. der Schwenkelemente 6 um einen definierten Schwenkwinkel, der sich über einen Teilkreis erstreckt, möglich ist.

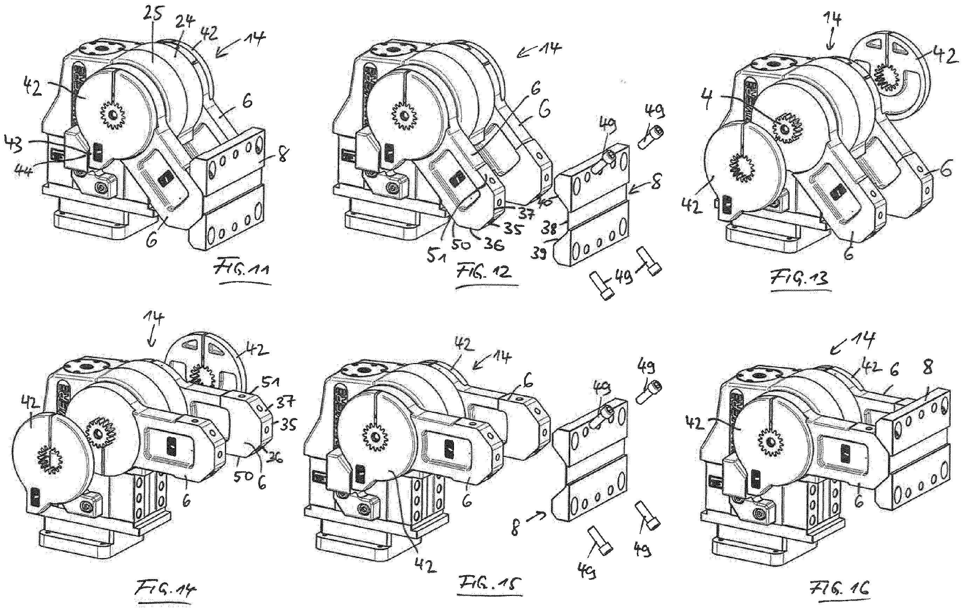

Die Fig. 11 bis 16 veranschaulichen für das Ausführungsbeispiel gemäß Fig. 6, allerdings ohne Kraftmittel bzw. Schrittmotor veranschaulicht, die Demontage und anschließende Montage derselben Aufnahme 8 nach veränderter Winkelstellung der beiden Schwenkelemente 6. Fig. 11 zeigt die beiden Schwenkelemente 6 in einer Endstellung, in der diese unter einem Winkel von 45° zu einer durch die Drehachse der Ausgangswelle 4 gehenden horizontalen Ebene nach unten geschwenkt sind. In dieser Endstellung kontaktieren die Bezugsauflagen 43 der beiden auf die Ausgangswelle 4 aufgesteckten Scheiben 42 die beiden Anschläge 44 des Gehäuses 5. In dieser Stellung der beiden Schwenkelemente 6 ist die Aufnahme 8, konkret die Ebene der Aufnahmeplatte in einer vertikalen Ebene positioniert. Ausgehend von dieser Stellung werden, wie es zur Fig. 12 veranschaulicht ist, vier Schrauben 49, mittels derer die Aufnahme 8 mit den beiden Schwenkelementen 6 verbunden ist, gelöst und dann auch die beiden Scheiben 42 bezüglich der Ausgangswelle 4 gelöst und abgezogen, wie es in Fig. 13 veranschaulicht ist. Dann werden die beiden Schwenkelemente 6 durch Schwenken der Ausgangswelle 4 um 45°, entgegen dem Uhrzeigersinn geschwenkt, sodass die Schwenkelemente 6 nunmehr in einer horizontalen Ebene positioniert sind. Dies ist in Fig. 14 gezeigt. Anschließend werden die beiden Scheiben 42 wieder auf die Zahnabschnitte 7 der Ausgangswelle 4 gesteckt, bei Kontaktierung von jeweiliger Bezugsauflage 43 und Anschlag 44, wie es in Fig. 15 gezeigt ist. Anschließend wird die Aufnahme 8 mittels der vier Schrauben 49 wieder mit den Enden der Schwenkelemente 6 verschraubt, wobei nun, im Gegensatz zum Ausgangszustand, bei dem die Aufnahme 8 mit deren Abschnitten 39 und 40 die Abschnitte 51 und 35 des jeweiligen Schwenkelements 6 kontaktiert hat, nunmehr die Abschnitte 39 und 40 der Aufnahme 8 die Abschnitte 36 und 37 des jeweiligen Schwenkelements 6 kontaktieren. Dieser Zustand ist in Fig. 16 gezeigt.

Die Fig. 1 bis 4 veranschaulichen unterschiedliche, besonders vorteilhafte Anordnungen von Schwenkertypen, die die beiden Schwenkvorrichtungen 1 und 2 aufweisen.

Beim Ausführungsbeispiel nach Fig. 1 ist die Schwenkvorrichtung 1 im Bereich einer oder zweier, parallel zueinander angeordneter Begrenzungsflächen 32 mit einem verfahrbaren Produktionsmittel, insbesondere einem Roboterarm verbunden, insbesondere verschraubt. Die Lagerung der Schwenkvorrichtung 1 erfolgt somit im Kopfteil 14 der Schwenkvorrichtung 1. Die Schwenkvorrichtung 1 ist nur mit einem Schwenkelement 6 versehen, das somit mit einem der beiden Zahnabschnitte 7 drehfest und axial festgelegt verbunden ist. Mit dem dem Zahnabschnitt 7 abgewandten Ende des Schwenkelements 6 ist die Aufnahme 8 verschraubt und mit der Aufnahme 8 die zweite Schwenkvorrichtung 2 verschraubt. Die Schraubverbindung erfolgt, wie bei der ersten Schwenkvorrichtung 1 im Bereich des Kopfteils 14, konkret der einen oder beiden Begrenzungsflächen 32. Mit dem Zahnabschnitt 7, der der ersten Schwenkvorrichtung 1 abgewandt aus dem Kopfteil 14 der zweiten Schwenkvorrichtung 2 herausgeführt ist, ist, wie zu den Fig. 8 bis 10 verdeutlicht, das Lagerelement 45 verbunden und mit diesem die Aufnahme 8 verschraubt. Mit der Aufnahme 8 ist ein Werkzeug verschraubt. Hierbei handelt es sich insbesondere um eine bei der Karosseriefertigung in der Kfz-Industrie Verwendung findende Spannvorrichtung, Schweißzange, Prägewerkzeug, Clinchwerkzeug oder Stiftziehzylinder.

Mittels der in Fig. 1 gezeigten Anordnung lässt sich somit über die erste Schwenkvorrichtung 1 die zweite Schwenkvorrichtung 2 schwenken und mittels der zweiten Schwenkvorrichtung 2 das Werkzeug, das in der Aufnahme 8 der zweiten Schwenkvorrichtung 2 gelagert ist, drehen. Die Drehbewegung der Aufnahme 8 des zweiten Werkzeugs 2 erfolgt um eine Achse, nämlich die Achse der zweiten Ausgangswelle 10, die parallel zur Achse der ersten Ausgangswelle 4 der ersten Schwenkvorrichtung 1 angeordnet ist.

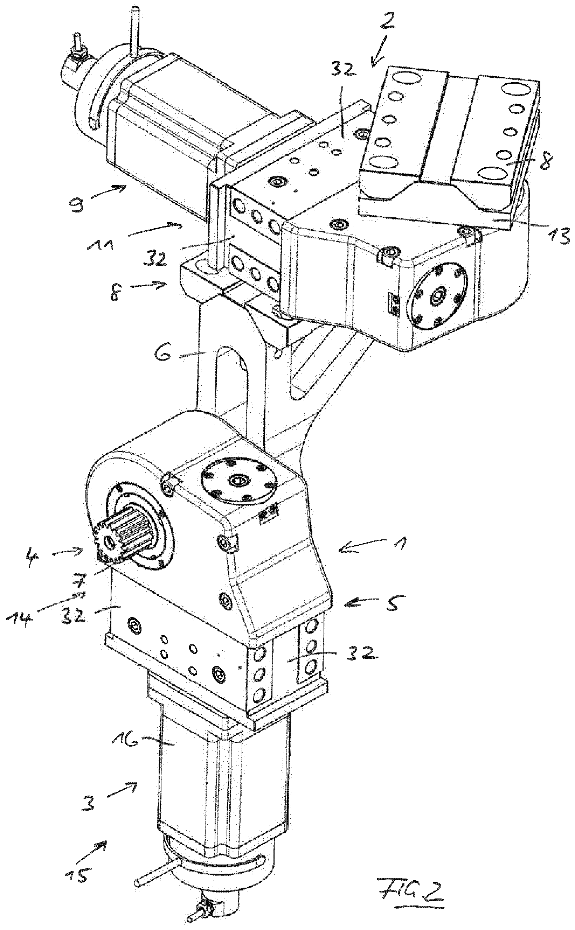

Das Ausführungsbeispiel gemäß der Fig. 2 unterscheidet sich von demjenigen nach der Fig. 1 nur dadurch, dass die zweite Schwenkvorrichtung 2 bezüglich deren Längsachse um einen Winkel von 90° gedreht bezüglich der Aufnahme 8 der ersten Schwenkvorrichtung 1 gelagert ist. Demzufolge erfolgt die Drehbewegung der Aufnahme 8 der zweiten Schwenkvorrichtung 2 um eine Achse, die parallel zu einer Achse ist, die senkrecht zur Schwenkachse der ersten Ausgangswelle 4 der ersten Schwenkvorrichtung 1 verläuft.

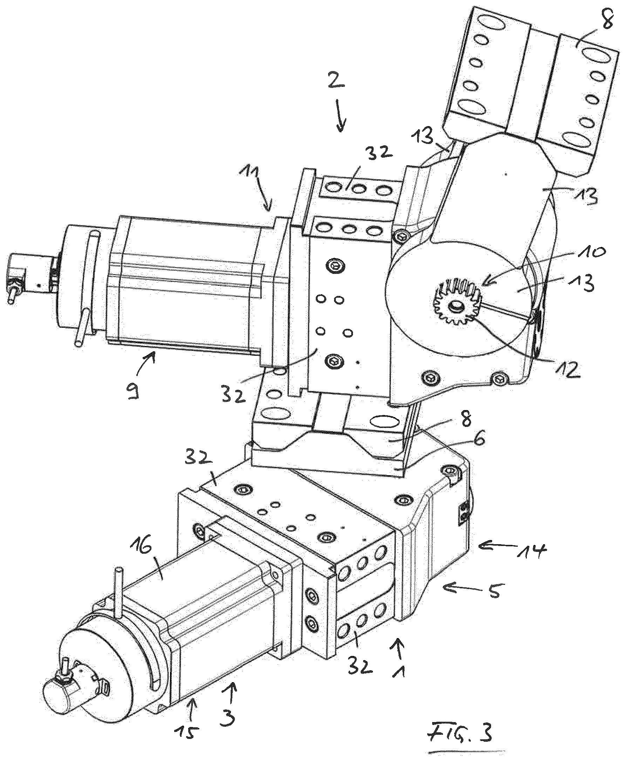

Das Ausführungsbeispiel gemäß der Fig. 3 unterscheidet sich von den Ausführungsbeispielen nach den Fig. 1 und 2 dadurch, dass die Drehvorrichtung nicht der zweiten Schwenkvorrichtung 2, sondern der ersten Schwenkvorrichtung 1 zugeordnet ist. Die zweite Schwenkvorrichtung 2 ist drehbar in der ersten Schwenkvorrichtung 1 gelagert, die entsprechend dem zur Fig. 8 veranschaulichten Ausführungsbeispiel gestaltet ist. Die zweite Schwenkvorrichtung 2 ist mit zwei Schwenkelementen 6 ausgebildet, in denen eine Aufnahme 8 gelagert und mit diesen mittels der Schrauben 9 verbunden ist. Die erste Schwenkvorrichtung 1 ist wiederum insbesondere mit einem Roboterarm fest verbunden und es ist in der zweiten Schwenkvorrichtung 2 schwenkbar das Werkzeug gelagert. Demzufolge erfolgen die Schwenkbewegung der Aufnahme 8 der zweiten Schwenkvorrichtung 2 um eine Achse, die parallel zu einer Achse ist, die senkrecht zur Schwenkachse der ersten Ausgangswelle 4 der ersten Schwenkvorrichtung 1 verläuft.

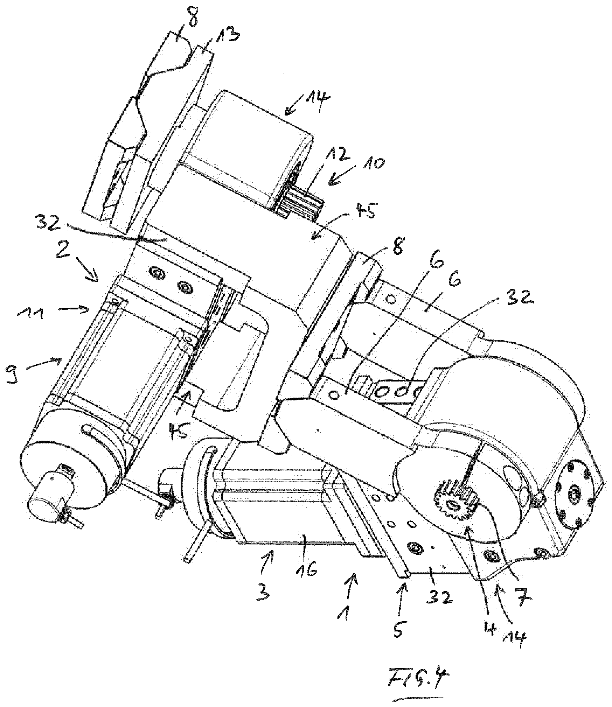

Das Ausführungsbeispiel nach der Fig. 4 unterscheidet sich von den Ausführungsbeispielen nach den Fig. 1 und 2 dadurch, dass die insbesondere mit dem Roboterarm verbundene erste Schwenkvorrichtung mit zwei Schwenkelementen 6 versehen ist, die im Bereich der beiden Enden der Ausgangswelle 4 mit dieser verbunden sind und mit den beiden Schwenkelementen 6 die Aufnahme 8 verschraubt ist, wobei in dieser Aufnahme 8 eine U-förmige Lagereinheit 45 gelagert und mit dieser Aufnahme 8 verschraubt ist, wobei die Lagereinheit 45 das Kopfteil 14 der zweiten Schwenkvorrichtung 2 auf abgewandten Begrenzungsflächen 32 kontaktiert und dort mit dem Kopfteil verschraubt ist. Auf der der ersten Schwenkvorrichtung 1 abgewandten Seite weist die zweite Ausgangswelle 10 der zweiten Schwenkvorrichtung 2 die Verbindung von Zahnabschnitt 7 und Schwenkelement 13 gemäß der Darstellung der Fig. 8 bis 10 auf sowie die mit dem Schwenkelement 13 verbundene Aufnahme 8, die der Aufnahme des Werkzeugs dient.

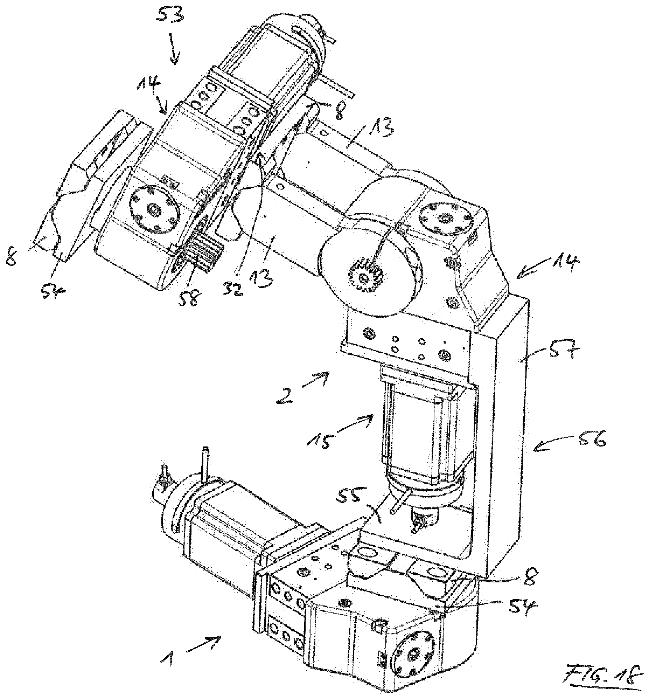

Bei dem in Figur 18 gezeigten Ausführungsbeispiel bilden drei Schwenkvorrichtungen 1, 2 und 53 die Anordnung. Hierbei ist mit der Ausgangswelle 4 der Schwenkvorrichtung 1 drehfest und axial festgelegt ein Schwenkelement 54 entsprechend dem Schwenkelement 13 verbunden und mit diesem Schwenkelement 54 eine Aufnahme 8 verschraubt. Mit dieser Aufnahme 8 ist auf der dem Schwenkelement 54 abgewandten Seite ein Schenkel 55 einer L-förmigen Lagereinheit 56 verschraubt, wobei der andere Schenkel 57 der Lagereinheit im Bereich dessen den Schenkel 55 abgewandten Endes mit dem Kopfteil 14 der Schwenkvorrichtung 2 im Bereich deren Begrenzungsfläche 32 verschraubt ist. Somit erstreckt sich das Antriebsteil 15 der Schwenkvorrichtung 2 bis nahe zum Schenkel 55. Entsprechend der Ausbildung der Schwenkvorrichtung 2 gemäß Fig. 3 sind bei der Ausführungsform gemäß Fig. 18 die beiden Schwenkelemente 13 der Schwenkvorrichtung 2 mit der Aufnahme 8 verbunden und es ist in dieser die Schwenkvorrichtung 53 gelagert. Diese ist im Bereich des Kopfteils 14, dort der Begrenzungsfläche 32 mit der Aufnahme 8 verschraubt. Der Ausgang der Schwenkvorrichtung 53 ist entsprechend dem Ausgang der Schwenkvorrichtung 1 gestaltet. Somit ist bei der Schwenkvorrichtung 53 eine Ausgangswelle 58 drehfest und axial festgelegt mit dem Schwenkelement 54 verbunden und mit diesem die Aufnahme 8 verbunden, zwecks Befestigung eines Werkzeugs an der Aufnahme 8. Die Schwenkvorrichtung 1 ist im Roboterarm gelagert und ermöglicht eine Drehung der Schwenkvorrichtung 2, wobei die Drehachse der Ausgangswelle 4 der Schwenkvorrichtung 1 und die Drehachse der Rotorwelle 28 der Schwenkvorrichtung 2 fluchten. In der Schwenkvorrichtung 2 ist die Schwenkvorrichtung 53 schwenkbar gelagert. In der Schwenkvorrichtung 53 ist bezüglich der Drehachse deren Aufnahme 8 das Werkzeug drehbar gelagert. Mit dieser in Fig. 18 gezeigten Anordnung kann das in der Schwenkvorrichtung 53 gelagerte Werkzeug mit größtmöglichem Freiheitsgrad bei großer räumlicher Verstellbarkeit bewegt werden.

Bei den beschriebenen Ausführungsbeispielen sind die Schwenkvorrichtungen jeweils elektromotorisch angetrieben. Es liegt durchaus im Rahmen der Erfindung, andere Antriebsarten zu wählen, beispielsweise einen pneumatischen Antrieb. Es sind auch Antriebe denkbar, bei denen eine Kniehebelanordnung Verwendung findet, die das jeweilige Schwenkelement in eine Übertotpunktstellung des Kniehebels positionieren.

Bevorzugt wird aber die Verwendung eines elektromotorischen Antriebs, insbesondere eines Schrittmotors gesehen. Hierdurch kann bei feiner Winkeleinteilung eine präzise Positionierung von zweiter Schwenkvorrichtung 2 zu erster Schwenkvorrichtung 1 sowie von dem Werkzeug zur zweiten Schwenkvorrichtung 2 gewährleistet werden.

### Bezugszeichenliste

- 1: erste Schwenkvorrichtung
- 2: zweite Schwenkvorrichtung
- 3: erstes Kraftmittel
- 4: erste Ausgangswelle
- 5: erstes Gehäuse
- 6: erstes Schwenkelement
- 7: Zahnabschnitt
- 8: Aufnahme
- 9: zweites Kraftmittel
- 10: zweite Ausgangswelle
- 11: zweites Gehäuse
- 12: Zahnabschnitt
- 13: zweites Schwenkelement
- 14: Kopfteil
- 15: Antriebsteil
- 16: Gehäuse
- 17: Anschluss
- 18: Bremse
- 19: Encoder
- 20: Anschluss
- 21: Gehäuse
- 22: Schneckengetriebe
- 23: Zwischengetriebe
- 24: Gehäusehälfte
- 25: Gehäusehälfte
- 26: Schraube
- 27: Welle
- 28: Rotorwelle
- 29: Schneckenwelle
- 30: Schneckenrad
- 31: Passfeder
- 32: Begrenzungsfläche
- 33: Aufnahmeprofil
- 34: Gegenprofil
- 35: zentraler Abschnitt
- 36: Seitenabschnitt
- 37: Seitenabschnitt
- 38: zentraler Abschnitt
- 39: Seitenabschnitt
- 40: Seitenabschnitt
- 41: Aufnahmefläche
- 42: Scheibe
- 43: Bezugsauflage
- 44: Anschlag
- 45: Lagereinheit
- 46: Schraubverbindung
- 47: Zahnausnehmung
- 48: Aufnahmeprofil
- 49: Schraube
- 50: Stirnabschnitt
- 51: Stirnabschnitt
- 52: Elektrische Wicklung
- 53: dritte Schwenkvorrichtung
- 54: Schwenkelement
- 55: Schenkel
- 56: Lagereinheit
- 57: Schenkel
- 58: Ausgangswelle

## Patentansprüche

1. Anordnung mit mindestens einer Schwenkvorrichtung, wobei eine erste Schwenkvorrichtung (1) ein erstes Kraftmittel (3), eine mittels des ersten Kraftmittels (3) antreibbare erste Ausgangswelle (4) und ein erstes Gehäuse (5) aufweist, wobei die erste Ausgangswelle (4) in dem ersten Gehäuse (5) gelagert und aus diesem herausgeführt ist, ferner mindestens ein erstes Schwenkelement (6), das mit der ersten Ausgangswelle (4) in deren herausgeführten Bereich drehfest verbunden ist, aufweist, **dadurch gekennzeichnet, dass** mit dem mindestens ersten Schwenkelement (6) eine zweite Schwenkvorrichtung (2) verbunden ist, wobei die zweite Schwenkvorrichtung (2) ein zweites Kraftmittel (9), eine mittels des zweiten Kraftmittels (9) antreibbare zweite Ausgangswelle (10) und ein zweites Gehäuse (11) aufweist, wobei die zweite Ausgangswelle (10) in dem zweiten Gehäuse (11) gelagert und aus diesem herausgeführt ist, ferner mit mindestens einem zweiten Schwenkelement (13), das mit der zweiten Ausgangswelle (10) in deren herausgeführten Bereich drehfest verbunden ist, zum Verbinden eines Werkzeugs oder einer dritten Schwenkvorrichtung (53) mit dem mindestens zweiten Schwenkelement (13).

2. Anordnung nach Anspruch 1, **dadurch gekennzeichnet, dass** das mindestens eine zweite Schwenkelement (13) mit dem Werkzeug, um mittels dessen die Funktion einer Schwenkvorrichtung, einer Schweißzange, eines Prägewerkzeugs, eines Clinchwerkzeugs oder eines Stiftziehwerkzeugs, insbesondere jeweils im Karosseriebau der Kfz-Industrie, zu vollführen, verbindbar ist.

3. Anordnung nach Anspruch 1 oder 2, **dadurch gekennzeichnet, dass** mindestens eine der Schwenkvorrichtungen (1, 2, 53), insbesondere die Schwenkvorrichtungen (1, 2, 53), jeweils ein als Elektromotor ausgebildetes Kraftmittel (3, 9), insbesondere ein als Schrittmotor oder als Brushless-Motor ausgebildetes Kraftmittel aufweisen.

4. Anordnung nach einem der Ansprüche 1 bis 3, **dadurch gekennzeichnet, dass** mindestens eine der Schwenkvorrichtungen (1, 2, 53), insbesondere die Schwenkvorrichtungen (1, 2, 53), jeweils ein Kraftmittel (3, 9) aufweisen, wobei die jeweilige Ausgangswelle (4, 10) über ein Getriebe (22, 23) an das Kraftmittel (3, 9) angebunden ist.

5. Anordnung nach Anspruch 4, **dadurch gekennzeichnet, dass** das jeweilige Getriebe (22, 23) zumindest ein Schneckengetriebe (22) aufweist, wobei ein Schneckenrad (30) des Schneckengetriebes (22) drehfest mit der Ausgangswelle (4, 10) verbunden ist und eine mit dem Schneckenrad (30) kämmende Schneckenwelle (29) an eine drehbare Ausgangswelle (28) des Kraftmittels (3, 9) angebunden ist.

6. Anordnung nach Anspruch 5, **dadurch gekennzeichnet, dass** das jeweilige Getriebe (22, 23) ein Zwischengetriebe (23) aufweist, das an die drehbare Ausgangswelle (28) des Kraftmittels (3, 9) und die Schneckenwelle (29) angebunden ist, insbesondere das Zwischengetriebe (23) ein Stirnradgetriebe ist.

7. Anordnung nach einem der Ansprüche 4 bis 6, **dadurch gekennzeichnet, dass** die jeweilige Schwenkvorrichtung (1, 2, 53) ein Antriebsteil (15), das das Kraftmittel (3, 9) aufweist, und ein Kopfteil (14), das das Getriebe (22, 23) aufweist, aufweist, wobei das Gehäuse (5, 11) in einen Gehäuseteil des Antriebsteils (15) und einen Gehäuseteil des Kopfteils (14) unterteilt ist, die beiden Gehäuseteile miteinander verbunden sind und das Kopfteil (14) mit mindestens einer Aufnahme (32) zum Lagern dieses Kopfteils (14) versehen ist.

8. Anordnung nach einem der Ansprüche 1 bis 7, **dadurch gekennzeichnet, dass** die jeweilige Ausgangswelle (4, 10) das Gehäuse (5, 11) der Schwenkvorrichtung (1, 2), insbesondere das Gehäuseteil des Kopfteils (14), auf einer Seite oder beidseitig durchsetzt und herausgeführt ist.

9. Anordnung nach Anspruch 8, **dadurch gekennzeichnet, dass** das jeweilige Schwenkelement (6, 13) mit einem Ende der Ausgangswelle (4, 10) drehfest verbunden ist und mit dem Schwenkelement (6, 13), im Bereich dessen der Ausgangswelle (4, 10) abgewandten Endes, eine Aufnahme (8), insbesondere eine Aufnahmeplatte verbunden ist, zur Befestigung einer Schwenkvorrichtung (2, 53) oder eines Werkzeugs an der Aufnahme (8).

10. Anordnung nach Anspruch 8, **dadurch gekennzeichnet, dass** mit jedem der beiden aus dem Gehäuse (5, 11) herausgeführten Enden der Ausgangswelle (4, 10) ein Schwenkelement (6, 13) drehfest verbunden ist, insbesondere identische Schwenkelemente (6, 13) drehfest verbunden sind, und mit den Schwenkelementen (6, 13) im Bereich deren der Ausgangswelle (4, 10) abgewandten Enden eine Aufnahme (8), insbesondere eine Aufnahmeplatte, verbunden ist, zur Befestigung einer Schwenkvorrichtung (2, 53) oder eines Werkzeugs an der Aufnahme (8).

11. Anordnung nach Anspruch 9 oder 10, **dadurch gekennzeichnet, dass** das eine Schwenkelement (6, 13) bzw. die beiden Schwenkelemente (6, 13) der jeweiligen Schwenkvorrichtung (1, 2, 53) ein Aufnahmeprofil (33) für die Aufnahme (8) und die Aufnahme (8) ein Gegenprofil (34), das mit dem Aufnahmeprofil (33) korrespondiert, aufweist, wobei das Aufnahmeprofil (33) und das Gegenprofil (34) derart gestaltet sind, dass diese Profile in unterschiedlichen Stellungen von Aufnahme (8) und Schwenkelement (6, 13) zueinander anordbar sind.

12. Anordnung nach Anspruch 11, **dadurch gekennzeichnet, dass** die Aufnahme (8), insbesondere die Aufnahmeplatte, mittels Schrauben (49) mit dem Schwenkelement (6, 13) bzw. den beiden Schwenkelementen (6, 13) verbunden ist und/oder die Schwenkvorrichtung (2, 53) mittels Schrauben mit der Aufnahme (8) verbunden ist.

13. Anordnung nach einem der Ansprüche 1 bis 12, **dadurch gekennzeichnet, dass** die Schwenkachsen der Ausgangswellen (4, 10, 58) parallel oder senkrecht oder geneigt zueinander sind, vorzugsweise die Schwenkachse der zweiten Ausgangswelle (10) parallel zur Schwenkachse der ersten Ausgangswelle (4) angeordnet ist oder eine parallel zu der Schwenkachse der zweiten Ausgangswelle (10) angeordnete Achse senkrecht zur Schwenkachse der ersten Ausgangswelle angeordnet ist.
